# EUROPÄISCHE PATENTSCHRIFT

(11) **EP 0 644 914 B1**
(45) Veröffentlichungstag und Bekanntmachung des Hinweises auf die Patenterteilung: **27.10.1999**
(21) Anmeldenummer: 93912938.3
(22) Anmeldetag: 09.06.1993
(51) Int. Cl.: C08K 3/00, C09C 3/08, C01B 33/00, C01G 23/04

(54) **ANORGANISCHE FÜLLSTOFFE UND ORGANISCHE MATRIXMATERIALIEN MIT BRECHUNGSINDEX-ANPASSUNG**
INORGANIC FILLERS AND ORGANIC MATRIX MATERIALS WHOSE REFRACTIVE INDEX IS ADAPTED
CHARGES INORGANIQUES ET MATERIAUX ORGANIQUES POUR MATRICES A INDICE DE REFRACTION ADAPTE

(30) Priorität: 12.06.1992 DE 4219287
(43) Veröffentlichungstag der Anmeldung: 29.03.1995
(73) Patentinhaber: MERCK PATENT GmbH, 64271 Darmstadt (DE); SIEMENS AKTIENGESELLSCHAFT, 80333 München (DE)
(72) Erfinder: POHL, Ludwig, D-6100 Darmstadt (DE); MARQUARD, Kurt, D-6107 Reinheim 1 (DE); WAITL, Günter, D-8400 Regensburg (DE); REEH, Ulrike, D-8000 München 50 (DE); WIPFELDER, Ernst, D-8000 München 80 (DE)
(86) Internationale Anmeldenummer: EP9301467
(87) Internationale Veröffentlichungsnummer: WO9325611

(56) Entgegenhaltungen:
- EP-A- 0 236 945
- US-A- 2 304 754
- CENTRAL PATENTS INDEX, BASIC ABSTRACTS JOURNAL Derwent Publications Ltd., London, GB; AN 89-352226
- H.S.Katz, J.V.Milewski (Her), Handbook of Fillers and Reinforcements for Plastics, Seiten 45-46, Van Nostrand Reinhold Company, 1978
- R.Gächter, H.Müller (Her), Taschenbuch der Kunstoff-Additive, 2,Ausgabe, Seiten 415-417, Carl Hanser Verlag, 1983
- L.Mascia, The Role of Additives in Plastics, seiten 112-130, Edward Arnold, 1974

## Beschreibung

Die Erfindung betrifft anorganische Füllstoffe und organische Matrixmaterialien mit Brechungsindex-Anpassung. In vielen technischen Anwendungen treten organische Materialien in Erscheinung, in die anorganische Füllstoffe inkorporiert sind. Die anorganischen Füllstoffe haben dabei häufig nicht nur Ersatz- und Verdünnungsfunktion, sondern dienen der Modifizierung des organischen Matrixmaterials oder verleihen diesem erst bestimmte Eigenschaften. In vielen Fällen, insbesondere wenn bei Anwendung oder Gebrauch optische Phänomene oder Effekte eine Rolle spielen, ist eine anwendungsspezifische Anpassung der optischen Brechungsindices von Füllstoff und Matrixmaterial wünschenswert oder sogar notwendig.

Zum Beispiel werden bei optischen, elektrooptischen und optoelektronischen Bauteilen, wie etwa Leuchtdioden und Laserdioden, Optokopplern und Photodetektoren, die Halbleiterbauelemente mit Einbettmassen auf Basis von polymeren oder polymerisierbaren Systemen umhüllt, wobei die Einbettmassen optische Funktionen zu erfüllen haben.

Aufgrund der optischen Eigenschaften der bislang eingesetzten Füllstoffe, wie z.B. Calciumfluorid, Calciumcarbonat, Bariumsulfat, amorphe Kieselsäure etc. ist deren Einsatzmenge aber derzeit limitiert. Als noch tolerable Obergrenze für die gängigen Füllstoffe sind etwa 25 Gew.% anzusehen. Dies liegt daran, daß durch die unterschiedlichen Brechungsindices von anorganischem Füllstoff und polymerer Matrix die Einbettmasse mit zunehmendem Anteil an Füllstoff optisch inhomogener wird und es durch Lichtstreuung an den anorganischen Partikeln zu einem erheblichen Streulichtverlust kommt. Der Brechungsindex von gängigen Epoxidharzsystemen, die als Einbettmassen für optische, elektrooptische und optoelektronische Bauteile üblich sind, liegt um etwa 1,5, der von Calciumfluorid bei 1,43 und der von spheroiden Teilchen amorpher Kieselsäure bei 1,42.

Weitere optische Inhomogenitäten, die zum Teil noch größere optische Verluste verursachen, kommen dadurch zustande, daß die üblicherweise eingesetzten anorganischen Partikel zur Agglomeration neigen, sich im Gießharz nicht ausreichend gleichmäßig dispergieren lassen und im nicht ausgehärteten Zustand zur Sedimentation neigen. Hochtransparente streulichtfreie Einbettmassen sind für Anwendungen wie bei Laserdioden und Optokoppler essentiell.

Etwas anders ist die Sachlage etwa bei Leuchtdioden für Anzeigezwecke. Diese sollen bei minimaler Eigenabsorption der Einbettmasse im Spektralbereich der Leuchtdiodenemission einen intensiven Streulichtkegel mit räumlich gleichmäßiger Intensitätsverteilung liefern. Zu diesem Zweck werden in die als Einbettmassen fungierenden Gießharzsysteme Diffusormaterialien eingearbeitet, die für eine ausreichende Lichtstreuung sorgen sollen. Als Diffusormaterialien werden üblicherweise die bereits genannten anorganischen Füllstoffe wie Calciumfluorid, Calciumcarbonat, Bariumsulfat und amorphe Kieselsäure eingesetzt. Die Streulichtausbeute ist abhängig von der Menge der zugesetzten Partikel, deren Brechungsindex, Teilchenform, Teilchengröße und Teilchengrößenverteilung. Günstig sind ein möglichst großer Unterschied der Brechungsindices von Partikelmaterial und polymerem Matrixmaterial und möglichst kugelförmige Partikel mit enger Teilchengrößenverteilung. Die üblicherweise als Diffusormaterialien eingesetzten anorganischen Füllstoffe weisen jedoch in der Regel ungleichmäßige Partikelformen und eine nicht chargenkonstante, relativ breite Teilchengrößenverteilung auf. Dies führt zu Schwankungen im Streuverhalten der Leuchtdioden und zu Verlusten in der Lichtausbeute. Ungenügendes Dispergierverhalten und Sedimentation der Partikel im Harzsystem bedingen ebenfalls derartige nachteilige Effekte.

Es bestand daher ein Bedürfnis nach verbesserten anorganischen Füllstoffen für den Einsatz in polymeren oder polymerisierbaren Systemen, insbesondere in Einbettmassen für optische, elektrooptische und optoelektronische Bauteile.

Es wurde nun gefunden, daß monodisperse, unporöse, kugelförmige Partikel auf Basis von SiO₂, TiO₂, ZrO₂, Al₂O₃, V₂O₅, Nb₂O₅ oder Mischsystemen hiervon sich in vorzüglicher Weise als Füllstoffe für derartige Anwendungen eignen und in mehrfacher Hinsicht die genannten Probleme vorteilhaft lösen. So kann zum einen je nach Wahl der den anorganischen Partikeln zugrundeliegenden Oxide bzw. der Zusammensetzung bei Mischoxiden der Brechungsindex der Partikel nach Maßgabe der Anwendung gezielt auf den Brechungsindex der organischen Matrix eingestellt werden, so daß etwa bei Brechungsindex-Identität hochtransparente oder etwa bei sehr unterschiedlichem Brechungsindex hoch-lichtstreuende Materialien entstehen. Das Vorliegen dieser Oxide oder Mischoxide in Form von monodispersen, unporösen, kugelförmigen Partikeln verleiht den damit versetzten organischen Matrixmaterialien zum anderen überragende optische Eigenschaften. Eine Oberflächenmodifizierung der Partikel mit kovalent gebundenen organischen Gruppen verbessert das Dipergierverhalten in organischen Medien, insbesondere die homogene Verteilung und Einbindung in Polymermaterialien und reduziert die Neigung zu Agglomeration und Sedimentation.

Gegenstand der Erfindung ist somit ein Verfahren zur Herstellung von optisch homogenen hochtransparenten oder hochlichtstreuenden Formkörpern oder von Einbettmassen aus a) organischen Matrixmaterialien und b) anorganischen Füllstoffen, welche gegebenenfalls an der Oberfläche durch kovalent gebundene organische Gruppen modifiziert sein können, dadurch gekennzeichnet, daß als Füllstoffe monodisperse unporöse kugelförmige Partikel auf Basis von SiO_{2,} TiO₂, ZrO₂, Al₂O₃, V₂O₅, Nb₂O₅ oder Mischsysteme hiervon verwendet werden, wobei der Brechungsindex der Partikel nach Maßgabe der Anwendung an den Brechungsindex der organischen Matrix angepaßt wird.

Erfindungsgemäß können nach diesem Verfahren optische , elektrooptische und optoelektronische Bauteile hergestellt werden. Die im Verfahren verwendeten Partikel können erfindungsgemäß an der Oberfläche kovalent gebundene organische Gruppen aufweisen. Eine erfindungsgemäße Verfahrensvariante besteht darin, daß die als Füllstoffe verwendeten Partikel kovalent in das Polymermaterial gebunden werden.

Optisch homogene, hochtransparent oder hochlichtstreuende Formkörper oder Einbettmassen, herstellbar nach dem erfindungsgemäßen Verfahren sind daher ebenfalls Gegenstand der vorliegenden Erfindung.

Die erfindungsgemäß zu verwendenden monodispersen, unporösen, kugelförmigen Partikel sind an sich aus dem Stand der Technik bekannt. Grundsätzlich sind Partikel auf der Basis von SiO₂, TiO₂, ZrO₂, Al₂O₃, V₂O₅ Nb₂O₅ oder entsprechende Mischoxide hiervon geeignet, die sich durch hydrolytische Polykondensation aus Alkoxidverbindungen entsprechender Elemente erhalten lassen und dabei in Form monodisperser kompakter sphärischer Partikel anfallen. Die grundliegenden Reaktionsbedingungen zur Herstellung von SiO₂-Partikeln durch hydrolytische Polykondensation sind beispielsweise aus den Publikationen W. Stöber et al. in J. Colloid and Interface Science 26, 62 (1968) und 30, 568 (1969) sowie dem US-Patent 3,634,588 zu entnehmen. Nach dieser Methode können auch andere Partikel, wie z.B. TiO₂ oder ZrO₂ hergestellt werden. Die so hergestellten Partikel zeigen aber oft große Standardabweichungen für die Teilchendurchmesser und weisen eine gewisse Porosität auf.

Für die Herstellung von hochmonodispersen, unporösen, kugelförmigen SiO₂-Partikeln, die eine Standardabweichung von nicht mehr als 5 % aufweisen, wird auf EP 0 216 278 hingewiesen, die ein entsprechend abgestelltes Herstellungsverfahren auf Basis von hydrolytischer Polykondensation offenbart. Kern dieses Verfahrens, das für die Herstellung der Partikel gemäß vorliegender Erfindung bevorzugt wird, ist eine zweistufige Vorgehensweise. Hierbei wird zunächst durch hydrolytische Polykondensation von Tetraalkoxysilanen in wäßrigalkoholisch-ammoniakalischem Medium ein Sol bzw. eine Suspension von Primärteilchen gebildet, die an daran anschließend durch dosierte Zugabe von weiterem Tetraalkoxysilan auf die gewünschte Endgröße bringt.

Das Verfahren gemäß EP-A-0 216 278 ist ohne weiteres und mit gleichem Ergebnis auf andere Oxide und auch auf Mischoxidsysteme übertragbar.

Ein sinngemäßes Verfahren zur Herstellung verschiedener Metalloxide in Form sphärischer Partikel mit enger Teilchengrößenverteilung ist EP-A-0 275 688 zu entnehmen.

Ein entsprechendes Zweistufenverfahren zur Herstellung unterschiedlicher Metalloxide und auch Mischoxide, die darüber hinaus an der Oberfläche noch glykolische Gruppen chemisch gebunden haben, ist in EP-A-0 391 447 beschrieben.

Bei der erfindungsgemäßen Anwendung der nach vorgenanntem Verfahren hergestellten monodispersen, unporösen, kugelförmigen Metalloxidpartikeln als Füllstoffe in organischen Matrixmaterialien kommt es sehr wesentlich darauf an, daß der Brechungsindex der Partikel nach Maßgabe der Verwendung an den Brechungsindex der organischen Matrix angepaßt ist.

Als organische Matrixmaterialien kommen grundsätzlich alle organischen Systeme in Betracht, in die üblicherweise anorganische Füllstoffe inkorporiert werden, insbesondere solche, bei denen die Füllstoffe zusätzlich funktionelle Zwecke zu erfüllen haben. Im Vordergrund des Interesses stehen polymere und polymerisierbare Systeme, die zu polymeren Formkörpern oder anderen entsprechenden Produkten verarbeitet werden.

Eine der grundsätzlichen Anwendungsmöglichkeiten ist die Herstellung von optisch homogenen, hochtransparenten polymeren Körpern. Die anwendungsspezifische Brechungsindexanpassung ist in diesem Fall so zu verstehen, daß die Brechungsindices von Füllstoff und organischer Matrix möglichst identisch sind.

Die Brechungsindices von organischen Verbindungen und lichttransparenten organischen Systemen, wie insbesondere Harze und Polymere, liegen in der Regel im Bereich zwischen 1,3 und 1,6. Bei Polymermaterialien liegt der Brechungsindex um 1,5.

Mit den hier in Betracht gezogenen anorganischen Oxiden liegt eine gewisse Auswahl an Materialien vor mit bestimmten unterschiedlichen Brechungsindices, mit denen sich aber nicht für alle organischen Matrixmaterialien der jeweilige Brechungsindex exakt treffen läßt. So zeigen beispielsweise monodisperse, unporöse, kugelförmige SiO₂-Partikel einen Brechungsindex von 1,42, entsprechende Al₂O₃-Partikel einen Brechungsindex um 1,6, entsprechende ZrO₂-Partikel einen Brechungsindex um 1,95 und entsprechende TiO₂-Partikel einen Brechungsindex von ca. 2,3.

Für die Einstellung anderer Brechungsindexwerte sind Partikel auf Basis von Mischoxiden die erfindungsgemäße Wahl. Durch Kombination von vorzugsweise zwei oder auch mehr verschiedener Oxide lassen sich bestimmte Brechungsindexwerte gezielt realisieren. Als grobe Richtschnur für den resultierenden Brechungsindex eines solchen Mischoxidsystems kann gelten, daß sich der Brechungsindex der Mischoxidpartikel im wesentlichen in arithmetischer Weise aus dem Brechungsindex der reinen Oxide und ihrem anteilsmäßigen Verhältnis im Mischoxidpartikel ergibt.

Die Herstellung solcher hochmonodisperser, unporöser, kugelförmiger Mischoxidpartikel erfolgt nach der vorangegangenen beschriebenen Methode, wobei im einfachsten Fall entsprechende Gemische von Alkoxiden der verschiedenen Elemente der hydrolytischen Polykondensation unterworfen werden.

Der jeweilige tatsächliche Brechungsindexwert in Abhängigkeit von Art und Mengenverhältnis der eingesetzten Alkoxide und von den gewählten Arbeitsbedingungen läßt sich ohne weiteres durch routinemäßige Inprozesskontrollen und/oder empirische Vorversuche ermitteln bzw. vorbestimmen.

Beispielsweise lassen sich aus einem Gemisch aus Tetraethoxysilan und Tetrabutoxytitan im Molverhältnis 4:1 monodisperse, unporöse, kugelförmige Mischoxidpartikel erhalten, in denen SiO₂ und TiO₂ im Verhältnis von ungefähr 80:20 vorliegen und die einen Brechungsindex von 1,52 aufweisen. Dieser Brechungsindex entspricht übrigens exakt dem eines handelsüblichen Epoxid-Harzsystems, das häufig als Einbettmasse für optische, elektrooptische und optoelektronische Bauelemente Verwendung findet. Die entsprechende Polykondensation eines Gemisches aus Tetraethoxysilan und Tetrapropoxyzirkon im Molverhältnis 1:1 liefert Partikel, in denen SiO₂ und ZrO₂ im Verhältnis von ungefähr 50:50 vorliegen und die entsprechend der rechnerischen Vorhersage einen Brechungsindex von 1,7 aufweisen.

Neben Metalloxidpartikeln mit homogener Verteilung der verschiedenen Oxide lassen sich auch gemischtphasige Partikel herstellen. Dies ist in einfacher Weise und nach dem eingangs beschriebenen Zweistufenverfahren möglich, in dem man etwa Primärpartikel aus einem Oxid bildet und dann im Aufwachsschritt ein anderes Oxid oder ein Oxidgemisch abscheidet. Überwiegt die Menge des im Aufwachsschritt gebildeten Oxides oder Mischoxides in dem Partikel, so ist für den resultierenden Brechungsindex im wesentlichen dieser Anteil bestimmend. Auch hier läßt sich die Abhängigkeit des Brechungsindex in einfachen Routineversuchen empirisch ermitteln.

Eine für den jeweiligen Anwendungszweck gegebenenfalls vorteilhafte organische Modifizierung der Partikel an der Oberfläche kann in völliger Übereinstimmung mit Methoden vorgenommen werden, wie sie für die Herstellung von als chromatographische Sorbentien gebräuchlichen Kieselgelen bekannt sind. Gängige Modifizierungsmittel sind Organoalkoxysilane, wie z.B. Methyltriethoxysilan, Ethyltriethoxysilan, Octyltriethoxysilan, Octadecyltriethoxysilan, Mono- oder Polyfluoroalkyltriethoxysilan oder auch Silane mit funktionalisierten Organogruppen, die eine spätere weitere Modifizierung durch kovalente Bindungsknüpfung in bekannter Weise ermöglichen. Im letzteren Fall sind solche Organoalkoxysilane im Hinblick auf den erfindungsgemäßen Einsatz der Partikel als Füllstoffe in polymeren oder polymerisierbaren Systemen bevorzugt, die solche funktionelle Gruppen aufweisen, mit denen sich eine kovalente Einbindung in das Polymermaterial erreichen läßt. Beispiele hierfür sind Trimethoxyvinylsilan, Triethoxyvinylsilan und 3-Glycidoxypropyltrimethoxysilan, 2-(3,4-Epoxycyclohexyl)-ethyltrimethoxysilan, [2-(3,4-Epoxy-4-methylcyclohexyl)-propyl]-methyldiethoxysilan, sowie Silane mit Hydroxyl-, Carboxyl-, Epoxy- und Carbonsäureestergruppen tragenden anorganischen Resten.

Partikel mit einer derartigen Oberflächenmodifizierung sind in der Lage, mittels der funktionellen Gruppen an der die Aushärtung von Epoxidharzsystemen bewirkenden Reaktion teilzunehmen und dabei kovalent in das Polymer eingebaut zu werden.

Selbstverständlich kann diese organische Modifizierung völlig analog auch bei anderen Oxiden als SiO₂ und/oder mit entsprechenden Organoalkoxiden andere Elemente vorgenommen werden.

Aus der zuerst genannten EP-A-0 216 278 ist auch zu entnehmen, daß die Partikel durch den Einsatz von Organoalkoxysilanen in der Matrix organisch modifiziert werden können. Für nähere Details hierzu wird auf die genannte Schrift verwiesen.

Im Falle einer Oberflächenmodifizierung der Partikel durch kovalent gebundene organische Gruppen werden die Eigenschaften der Teilchen hinsichtlich Kugelform, Unporosität, Monodispersität und Brechungsindex nicht beeinflußt, während die vorteilhaften Eigenschaften, die mit einer derartigen Modifizierung einhergehen, wahrgenommen werden können.

Die Partikel können erfindungsgemäß überall da als Füllstoffe in organischen Matrixmaterialien vorteilhaft eingesetzt werden, wo es auf eine anwendungsspezifische Brechungsindexanpassung bei höchster optischer Homogenität ankommt. Vorteile bieten die erfindungsgemäß einzusetzenden Partikel durch die Möglichkeit der gezielten Brechungsindexanpassung und die extreme optische Homogenität der damit versetzten Matrixmaterialien, die durch das Vorliegen der Partikel in hochmonodisperser, kompakter und sphärischer Form bedingt ist. Durch organische Oberflächenmodifizierung wird das Dispergierverhalten der Teilchen in organischen Medien entscheidend verbessert und die Neigung zur Sedimentation verringert, wodurch eine hohe Gleichverteilung resultiert. Letzteres läßt sich noch verstärken durch Oberflächenmodifizierung mit Gruppen, die zur kovalenten Bindungsknüpfung mit dem organischen Matrixmaterial befähigt sind.

Beispiele für derartige Anwendungen sind optisch homogene, hochtransparente polymere Formkörper für optische Zwecke, wie etwa optische Bauteile oder die polymeren Einbettungen der Halbleiterelemente elektrooptischer und optoelektronischer Bauteile, insbesondere von Laserdioden, Optokopplern und Photodetektoren.

Bei den genannten Anwendungen werden Partikel mit Durchmesser von 50 bis 1500 nm eingesetzt. Bevorzugt sind Partikel im Größenbereich 100 bis 1000 nm.

Die als Matrixmaterialien dienenden Polymersysteme für diese Anwendungen, ihre Herstellung und ihre Verarbeitung sind an sich bekannt und dem einschlägigen Stand der Technik ohne weiteres entnehmbar.

Als typische Epoxidharzsysteme, die als Gießharze für die Einbettung von optoelektronischen Bauelementen in Frage kommen, sind beispielhaft solche zu nennen, die etwa auf 3,4-Epoxy-cyclohexancarbonsäure-3,4-epoxycyclohexanmethylester 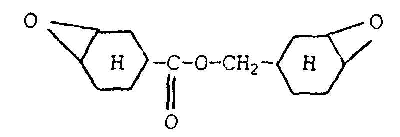 oder auf "Bisphenol - A - Epoxid" 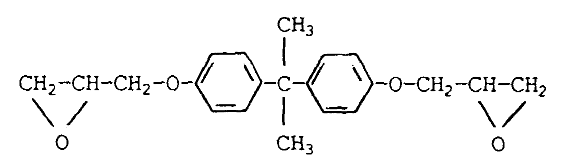 basieren. Entsprechende handelsübliche Gießharzsysteme enthalten üblicherweise im Gemisch oder als separat zuzusetzende Komponenten noch Härter und Härtungsbeschleuniger auf Basis organischer Säureanhydride und organischer Amine, sowie ggf. weitere Additive.

Die erfindungsgemäßen Partikel, vorzugsweise mit einer organischen Oberflächenmodifizierung mittels 2-(3,4-Epoxycyclohexyl)-ethyltrimethoxysilan, werden im gewünschten Anteil mit dem entsprechenden Gießharz vermischt und darin homogen dispergiert. Je nach Anwendungszweck und Funktion können die Partikel in dem Polymermaterial in einem Anteil von 0,1 bis ca. 40 Gew.-% vorliegen. Gängiger Bereich bei Einbettmassen für optoelektronische Bauteile ist 0,5-25 Gew.-%, bezogen auf das gesamte Gießharzsystem. Bei Einbettmassen für Leuchtdioden, in denen den Partikeln Diffusorfunktion zukommt, kann sich ihr Anteil zwischen 1 und 15 Gew.-% bewegen.

Aufgrund der besonderen Vorteile der erfindungsgemäß einzusetzenden Partikel kann ihr Anteil in den entsprechenden Materialien im Bedarfsfall auch deutlich erhöht werden. Die Gefahr von Spannungen und Rißbildung, die im Falle thermischer Belastung bei Betrieb derartiger Bauteile drohen kann, läßt sich hierdurch erheblich reduzieren.

Die Partikel können bereits als solche den Polymermassen zugegeben und darin dispergiert werden. Bevorzugt ist jedoch der Einsatz in Form einer Vordispersion der Partikel in einem mit dem Polymersystem kompatiblen Lösungsmittel. Beispiele von Dispergiermedien, die je nach Natur des Polymersystems eingesetzt werden können, sind aliphatische Alkohole wie Ethanol und Butanol, Aceton, Glycol, Diethylenglycol und Polyglycole. Die Dispergierung in Polyglycolen, die bei Raumtemperatur fest sind, erfolgt nach Erwärmung oberhalb der Schmelztemperatur. Bevorzugt ist ebenfalls die Vordispersion der Partikel als "Masterbatch" in dem entsprechenden Polymersystem oder einem damit kompatiblen Harz oder Polymermaterial. Hierin kann der Anteil an Partikeln bis zu ca. 50 Gew.-% betragen.

Bei der Verwendung der erfindungsgemäßen Partikel als Füllmaterial in Einbettmassen für Leuchtdioden, wo den Partikeln optische Diffusorfunktion zukommt, sind gegenüber üblichen Diffusormaterialien eine höhere Streuintensität, eine Erhöhung der Lichtausbeute und eine Verbesserung der Homogenität der Streulichtkegel zu beobachten. Für die Leistungsbeurteilung von Leuchtdioden kommt es auf die Helligkeit bzw. Lichtausbeute, auf eine definierte Abstrahlcharakteristik und auf ein homogenes Leuchtbild an.

Überraschend hat sich gezeigt, daß Leuchtdioden, deren Einbettmassen die erfindungsgemäßen Partikel als Diffusoren enthalten, eine um ca. 25 % höhere Streuintensität und eine um ca. den Faktor 2 größere Lichtausbeute aufweisen, im Vergleich zu entsprechenden Bauteilen mit Calciumfluorid als Diffusormaterial.

Als weitere erfindungsgemäße Anwendung brechungsindexangepaßter, monodisperser, unporöser, kugelförmiger Oxidpartikel kommt der Einsatz als Füllstoffe in hochtransparenten oder auch opaken Kunststoffolien sowie in Fotoemulsionen in Betracht.

Bei Trägerfolien für magnetische Aufzeichnungsbänder dienen diese Partikel, vorzugsweise wenn sie eine organische Oberflächenmodifizierung aufweisen, zur Verbesserung der Gleiteigenschaften der Bänder.

### Beispiel 1

Zu einem auf 30 °C thermostatisierten Gemisch aus 520 ml Ethanol, 230 ml Wasser und 140 ml 25%igen Ammoniak gibt man unter intensiver Durchmischung in einem Guß eine auf gleiche Temperatur eingestellte Lösung aus 66,7 g (0,32 mol) Tetraethoxysilan und 27,2 g (0,08 mol) Tetrabutoxytitan in 120 ml Ethanol. Man rührt noch intensiv für 15 Sekunden und läßt dann das Reaktionsgemisch für eine Stunde ruhig stehen.

Die entstandenen Teilchen liegen im Reaktionsgemisch dispergiert vor und können durch Abzentrifugieren und gegebenenfalls wiederholtes Aufnehmen in Wasser und erneutes Abzentrifugieren und anschließendes Trocknen als trockenes Pulver gewonnen werden.

Man erhält dichte sphärische Teilchen mit Partikeldurchmesser von 500 ± 15 nm. In den Partikeln liegen SiO₂ und TiO₂ ungefähr im Verhältnis 80:20 vor. Den Brechungsindex des Pulvers bestimmt man mikroskopisch nach der bekannten Methode der Verschiebung der Becke-Linie zu 1,52.

### Beispiel 2

Zu einem auf 30 °C thermostatisierten Gemisch aus 520 ml Ethanol, 230 ml Wasser und 140 ml 25%igen Ammoniak gibt man unter intensiver Durchmischung in einem Guß eine auf gleiche Temperatur eingestellte Lösung aus 42 g (0,2 mol) Tetraethoxysilan und 65,5 g (0,2 mol) Tetrapropoxyzirkon in 150 ml Ethanol. Man rührt noch intensiv 20 Sekunden, läßt dann das Reaktionsgemisch zwei Stunden ruhig stehen und rührt anschließend erneut für zwei Stunden. Die Gewinnung der Partikel erfolgt wie in Beispiel 1.

Man erhält dichte sphärische Teilchen mit einem Partikeldurchmesser von 500 ± 20 nm. In den Partikeln liegen SiO₂ und ZrO₂ ungefähr im Verhältnis 1:1 vor. Der Brechungsindex wird zu 1,65 bestimmt.

### Beispiel 3

Zu einem auf 30 °C thermostatisierten Gemisch aus 600 ml Ethanol, 225 ml Wasser und 140 ml 25%igen Ammoniak gibt man unter intensiver Durchmischung 90 ml (0,4 mol) Tetraethoxysilan. Man erhält hierdurch eine Dispersion von Teilchen mit mittlerem Durchmesser von 500 nm. Die entstandenen Teilchen werden in 500 ml Ethanol umdispergiert. In diese Dispersion läßt man bei 40 °C ein Gemisch aus 9 ml (0,04 mol) Tetraethoxytitan und 400 ml Ethanol innerhalb von 2 Stunden eintropfen und danach noch 2 Stunden nachreagieren. Hierdurch erreicht man ein Aufwachsen von TiO₂ auf SiO₂-Primärpartikel. Die Aufarbeitung erfolgt gemäß Beispiel 1.

Man erhält dichte sphärische Teilchen mit einem Partikeldurchmesser von 500 ± 20 nm. Der Brechungsindex wird zu 1,48 bestimmt.

### Beispiel 4

Man verfährt wie in Beispiel 3, nur daß man den Aufwachsschritt mit 18,25 g (0,08 mol) Tetraethoxytitan in 400 ml Ethanol durchführt. Man erhält dichte sphärische Teilchen mit einem Partikeldurchmesser von 490 ± 15 nm und mit einem Brechungsindex von 1,51.

### Beispiel 5

Man verfährt wie in Beispiel 3, nur daß man den Aufwachsschritt mit 34,2 g (0,15 mol) Tetraethoxytitan durchführt. Man erhält dichte sphärische Teilchen mit einem Partikeldurchmesser von 555 ± 15 nm und mit einem Brechungsindex von 1,58-1,60.

### Beispiel 6

Zu einem Gemisch aus 825 ml Ethanol, 308 ml Wasser und 193 ml 25%igem Ammoniak, das man auf genau 35 °C thermostatisiert hat, werden in einem Guß 123 ml Tetraethoxysilan hinzugegeben. Die Mischung wird kräftig durchgerührt und nach 15 Sekunden das Rührwerk abgeschaltet. Das Reaktionsgemisch läßt man für eine Stunde ruhig stehen. Danach liegt eine Dispersion von Saatpartikeln in der Größe von 375 nm (REM-Kontrolle) vor.

Die Saatdispersion wird für den Aufwachprozess vorbereitet, indem man weitere 308 ml Wasser und 193 ml 25%ige Ammoniaklösung hinzufügt. Danach wird die Dispersion auf 40 °C Reaktionstemperatur gebracht und während des ganzen Prozesses exakt eingehalten.

Mittels einer Dosierpumpe wird mit einer Dosiergeschwindigkeit von ca. 7 ml/min eine Aufwachsmischung bestehend aus 2213 ml Ethanol und 2213 ml Tetraethoxysilan in die Reaktionsmischung kontinuierlich hinzugepumpt. Nach der vollständigen Zugabe der Aufwachsmischung rührt man über Nacht die gesamte Dispersion bei 40 °C weiter. Die anschließende Kontrolle mit dem REM zeigt Teilchen von 1000 mm Durchmesser.

Zur Oberflächenmodifizierung der Partikel wird die Reaktionsmischung eingeengt, wobei man das ganze Ethanol und den Ammoniak abdestilliert. Die nunmehr wäßrige Dispersion wird in ca. 1800 ml 1-Butanol umdispergiert, wobei das Wasser azeotrop abdestilliert wird.

Die Silanisierung der Monospheres findet in der butanolischen Dispersion statt. Dazu wird die Dispersion (- 10,5 mol bezogen auf festes SiO₂) auf 70 °C erwärmt, 10,4 g (4 mmol/mol SiO₂) 2-(3,4-Epoxycyclohexyl)-ethyltrimethoxysilan hinzugefügt und das Ganze über Nacht bei gleicher Temperatur reagieren gelassen.

Anschließend werden 2900 ml Aceton zum Ansatz als Lösungsvermittler hinzugegeben und 5670 g eines Epoxydharzes auf Basis von 3,4-Epoxy-cyclohexancarbonsäure-3,4-epoxycyclohexanmethylester (Araldit® CY 179; Ciba Geigy AG) hinzugewogen. Danach werden die Lösungsmittel quantitativ abgezogen; es entsteht eine ca. 10%ige Dispersion der spherischen SiO₂-Teilchen in Epoxydharz. Diese Dispersion ist Ausgang zur Verarbeitung in z.B. epoxydische Gießharze für Leuchtdioden.

### Beispiel 7

Leuchtdiodenhalbleiterelemente werden in üblicher Technik mit dem Gießharzsystem aus Beispiel 6 eingegossen und das Harz thermisch ausgehärtet.

Als Vergleich dienen Bauteile, die die entsprechende Menge CaF₂ als Diffusor in dem Einbettmaterial enthalten.

| | Abstrahlwinkel | Helligkeit |
|---|---|---|
| erfindungsgemäßes Bauteil | 55° | 8,5 |
| Vergleichsbauteil | 77° | 3,5 |

Die erfindungsgemäßen Bauteile zeigen eine ca. 25 % höhere Streuintensität und eine um ca. den Faktor 2 größere Lichtausbeute.

## Patentansprüche

1. Verfahren zur Herstellung von optisch homogenen, hochtransparenten oder hochlichtstreuenden polymeren Formkörpern oder von Einbettmassen aus
a) organischen Matrixmaterialien und
b) anorganischen Füllstoffen, welche gegebenenfalls an der Oberfläche durch kovalent gebundene organische Gruppen modifiziert sein können,
dadurch gekennzeichnet, daß als Füllstoffe monodisperse, unporöse, kugelförmige Partikel auf Basis von SiO₂, TiO₂, ZrO₂, Al₂O₃, V₂O₅, Nb₂O₅ oder entsprechenden Mischoxiden hiervon verwendet werden, wobei der Brechungsindex der Partikel nach Maßgabe der Anwendung an den Brechungsindex der organischen Matrix angepaßt wird.

2. Verfahren gemäß Anspruch 1 zur Herstellung von optischen, elektrooptischen und optoelektronischen Bauteilen.

3. Verfahren gemäß Anspruch 2, dadurch gekennzeichnet, daß als Füllstoffe Partikel verwendet werden, die eine Oberflächenmodifizierung durch kovalent gebundene organische Gruppen aufweisen.

4. Verfahren gemäß Anspruch 2, dadurch gekennzeichnet, daß die als Füllstoffe verwendeten Partikel kovalent in das Polymermaterial gebunden werden.

5. Optisch homogene, hochtransparente oder hochlichtstreuende Formkörper , herstellbar nach einem Verfahren gemäß der Ansprüche 1 - 4, dadurch gekennzeichnet, daß der Brechungsindex der Füllstoffe nach Maßgabe der Anwendung an den der Matrix angepaßt ist.

6. Optisch homogene, hochtransparente oder hochlichtstreuende Einbettmassen , herstellbar nach einem Verfahren gemäß der Ansprüche 1 - 4, dadurch gekennzeichnet, daß der Brechungsindex der Füllstoffe nach Maßgabe der Anwendung an den der Matrix angepaßt ist.

## Claims

1. Process for the production of optically homogeneous, highly transparent or highly light-scattering polymeric shaped articles or of embedding compositions consisting of
a) organic matrix materials and
b) inorganic fillers which may be modified on the surface by covalently bonded organic groups, characterized in that the fillers used are monodisperse, non-porous, spherical particles based on SiO₂, TiO₂, ZrO₂, Al₂O₃, V₂O₅, Nb₂O₅ or corresponding mixed oxides thereof, the refractive index of the particles being adapted to the refractive index of the organic matrix according to the use.

2. Process according to Claim 1 for the production of optical, electro-optical and optoelectronic components.

3. Process according to Claim 2, characterized in that the fillers used are particles which are modified on the surface by covalently bonded organic groups.

4. Process according to Claim 2, characterized in that the particles used as fillers are bonded covalently in the polymer material.

5. Optically homogeneous, highly transparent or highly light-scattering shaped articles which can be produced by a process according to Claims 1-4, characterized in that the refractive index of the fillers is adapted to that of the matrix according to the use.

6. Optically homogeneous, highly transparent or highly light-scattering embedding compositions which can be produced by a process according to Claims 1-4, characterized in that the refractive index of the fillers is adapted to that of the matrix according to the use.

## Revendications

1. Procédé de fabrication d'articles façonnés ou de masses d'enrobage en polymères optiquement homogènes, hautement transparents ou hautement diffusants, à partir de :
a) matériaux de matrice organiques ; et
b) matières de charge inorganiques pouvant le cas échéant être modifiées en surface par des groupes organiques liés de manière covalente,
caractérisé en ce que les matières de charge utilisées sont des particules sphériques, non poreuses, monodispersées à base de SiO₂, TiO₂, ZrO₂, Al₂O₃, V₂O₅, Nb₂O₅ ou d'oxydes mixtes correspondants de ceux-ci, l'indice de réfraction des particules étant adapté à l'indice de réfraction de la matrice organique en fonction de l'utilisation.

2. Procédé selon la revendication 1 pour la fabrication de composants optiques, électro-optiques et opto-électroniques.

3. Procédé selon la revendication 2, caractérisé en ce que les matières de charge utilisées sont des particules présentant une modification en surface par des groupes organiques liés de manière covalente.

4. Procédé selon la revendication 2, caractérisé en ce que les particules utilisées comme matières de charge sont liées de manière covalente au matériau polymère.

5. Articles façonnés optiquement homogènes, hautement transparents ou hautement diffusants pouvant être fabriqués par un procédé selon les revendications 1 à 4, caractérisés en ce que l'indice de réfraction des matières de charge est adapté à celui de la matrice en fonction de l'utilisation.

6. Masses d'enrobage optiquement homogènes, hautement transparentes ou hautement diffusantes pouvant être fabriquées par un procédé selon les revendications 1 à 4, caractérisées en ce que l'indice de réfraction des matières de charge est adapté à celui de la matrice en fonction de l'utilisation.
